# EUROPEAN PATENT APPLICATION

(11) **EP 4 847 818 A1**
(43) Date of publication of application: **02.12.2026**
(21) Application number: 25203154.7
(22) Date of filing: 18.09.2025
(51) Int. Cl.: F16L 15/00

(54) **FLEXIBLE HOSE CONNECTOR FOR APPLICATION IN HYDRAULIC SYSTEM**

(30) Priority: 27.05.2025 BR 102025010696
(71) Applicant: Dynamics Do Brasil Metalurgia Ltda., 95098-380 Caxias do Sul - RS (BR)
(72) Inventor: MANZATO, FERNANDO, Caxias do Sul, RS (BR)
(74) Representative: Pereira Garcia, João Luís

(57) **Abstract**

The present invention relates to a flexible hose connector used in hydraulic systems, developed to offer more efficient, safe, and ergonomic assembly, which facilitates hose handling through a specifically designed body, improving the connection and disconnection of hydraulic quick-connect couplings and other components. The connector comprises a steel metal body (10) with inner thread (11) and outer thread (12), or both outer threads (12), at opposite ends, allowing direct connection between the hose and the quick-connect coupling, eliminating the need for adapters. The steel body (10) includes an external hexagon for applying torque during assembly. The invention also includes an external anodized aluminum cover (20) secured by an elastic ring and accompanied by an O-ring, which prevents vibration and involuntary rotation. The cover (20) also allows visual identification by means of colors or symbols. The set has advantages such as reduced component number, the use of steel in the body (10) ensures increased pressure resistance, a smaller outer diameter, and a simplified manufacturing process, with greater mechanical resistance to pressure and assembly torque. It also allows for assembly using an external hexagon without compromising the anodized aluminum cover. The product also allows the operator to rotate the cover to read the recordings.

## Description

### TECHNICAL FIELD OF THE INVENTION

The present invention relates to the field of connection devices for hydraulic systems, more specifically it relates to a flexible hoses connector and quick-connect couplings designed to provide a more efficient, safe, compact, and ergonomic assembly, facilitating hose handling through a specifically designed body, thus improving the connection and disconnection of hydraulic quick-connect couplings and other components. The connector consists of a steel body with an inner thread (female) or outer thread (male) on one end and an outer thread (male) on the other, allowing direct connection between the hose and the quick-connect coupling without the need for additional adapter components. The body geometry includes an external hexagon that facilitates assembly with the application of appropriate torque, with no impairing the integrity of the assembly.

The invention also comprises an anodized aluminum outer cover attached to the body by an elastic ring, complemented by an O-ring that prevents vibration and involuntary rotation of the cover during use. The cover also has additional function of visual identification and can be given distinct colors and symbols to organize the hose lines.

The set also has embodiment advantages such as the use of high-resistance materials in the internal part (environment subject to high pressure and high wear) and using low-resistance aluminum only in the external part, adding greater resistance to internal pressure and assembly torque, and smaller total diameter of the product.

### BACKGROUND OF THE INVENTION

Hydraulic systems often use flexible hose connections to transport pressurized fluids. The integrity and efficiency of these connections depend directly on the quality of the connectors used, and it is common to use multiple parts to ensure sealing, fastening, and correct line identification. However, existing prior-art solutions often feature connections made entirely of aluminum and are susceptible to failure, especially when subjected to elevated levels of internal pressure and inadequate torque during installation. Aluminum connections are typically used in situations where line color is mandatory for visual identification.

Several known connectors require additional parts for adaptation, such as sleeves, nuts, or thread adapters, increasing assembly time and cost. Furthermore, many models use internal fastening elements, such as Torx or Allen wrenches, limiting the applicable torque and making field installation difficult, potentially compromising the connection durability or its installation or repair. Another critical issue is the lack of standardized visual identification features, which can lead to connection errors between hose lines with different purposes.

Another limitation of commercially available parts, especially those made entirely of aluminum, is that some threaded fittings do not meet international standards, failing to meet the stablished working pressure or torque. This type of embodiment limits the working pressure and torque of the connections.

Given these shortcomings, the need for a more compact, robust, and easy-to-install connector that provides safety and meets the specific standards for each thread model used in hydraulics, as well as greater operational reliability, is identified. Additionally, there is an increasing demand for connectors allowing immediate visual identification of hydraulic lines, reducing human error, and enhancing system safety. The present invention comes as an innovative technical solution to meet these needs, overcoming the limitations of prior-art devices.

In the current state of the art, several devices are known for connecting flexible hoses in hydraulic systems, especially in applications requiring high pressure resistance, efficient sealing, and quick assembly. Notable among these devices are connectors composed of metal parts with inner or outer threads on both sides, which often require the use of additional adapters to secure the hose and quick-connect coupling. This type of configuration increases the number of parts in the system, increases the assembly process cost, and can compromise reliability in severe applications. By replacing aluminum with steel in the threaded section, the grip adapter offers the mechanical properties of steel with the decorative and visual advantages of aluminum on the outside.

A representative example is that described in EP2711465 (Rubenbauer, Georg. 2021) showing a connector with a gripping part made of metal and anodized aluminum alloy, manufactured in a single piece. This part has inner threads on both sides for connection to a flexible hose and a quick coupling through the use of an adapter, in addition to having longitudinal grooves on the outer surface for improved grip. The proposal of said document aims to ensure durability and fluid resistance, as well as allowing permanent markings for identification of hydraulic lines.

The present invention, however, differs significantly from this concept by incorporating a steel body with outer or inner threads, allowing direct connection to both the hose and the quick-connect coupling, with no need for adapters. This solution reduces the number of components in the connection system and simplifies the assembly process. Furthermore, the structure is optimized to withstand higher levels of torque and pressure (provided by the use of steel), ensuring superior performance and convenient assembly using the outer hexagon, with no damage to the anodized aluminum cover used for visual identification by colors and laser-etched symbols.

### SUMMARY OF THE INVENTION

The present invention relates to a connector for flexible hose intended for use in hydraulic systems, with construction features that generate an unexpected technical effect compared to prior art.

The present invention describes a connector providing a direct connection between a flexible hose and a quick coupling by means of a metal body with an inner or outer thread on one side and an outer thread on the other, eliminating the need for additional adapters.

The present invention describes a connector providing a reduction in the number of components in the hydraulic system, resulting in a more compact, lightweight, and efficient assembly.

The present invention describes a connector providing secure attachment of the anodized aluminum cover to the metal body, using an elastic locking ring and an O-ring, which prevent vibrations and involuntary rotations during use.

The present invention describes a connector providing quick and efficient visual identification of hydraulic lines through the colored anodized cover, allowing coding by colors or symbols.

The present invention describes a connector providing high resistance to torque and internal pressure, allowing a robust and reliable assembly suitable for severe applications in hydraulic systems.

The present invention describes a connector providing ease of assembly with no damage to the external cover finish, thanks to the presence of an external hexagon in the body made of steel, allowing the use of conventional tools with no interference in the anodized part made of aluminum.

### BRIEF DESCRIPTION OF THE DRAWNINGS

In order to the present invention to be fully understood and put into practice by a person skilled in the art in this technological field, the present text will be described in a clear, concise and sufficient manner, based on the attached drawings, which illustrate and support it, listed below:

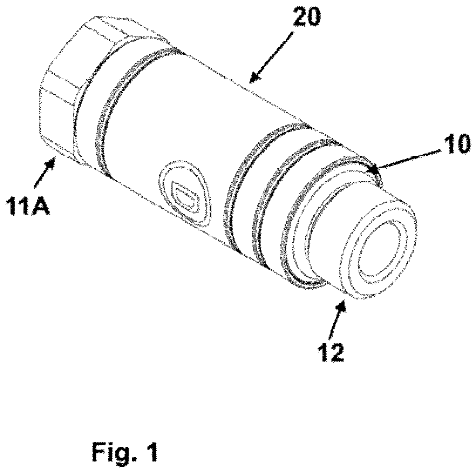

Figure 1 shows the perspective view of the connector.

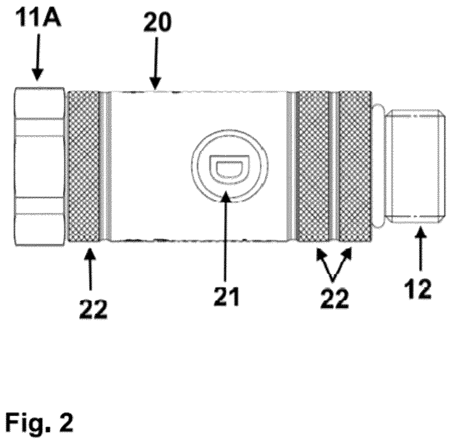

Figure 2 shows the side view of the connector.

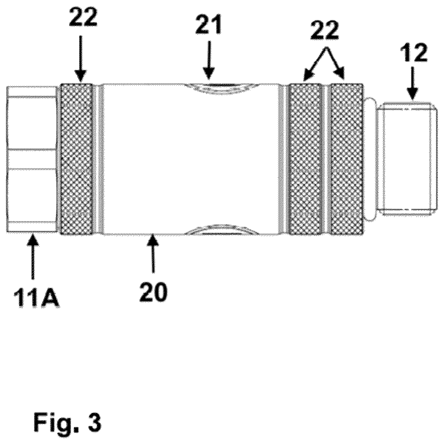

Figure 3 shows the right-side view of the connector.

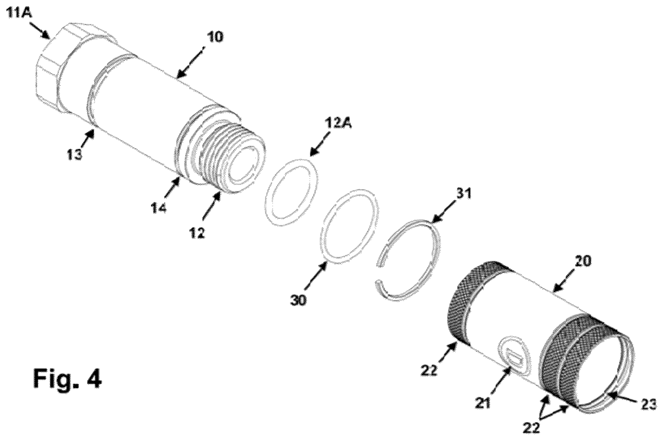

Figure 4 represents the exploded perspective view of the connector detailing the embodiment thereof.

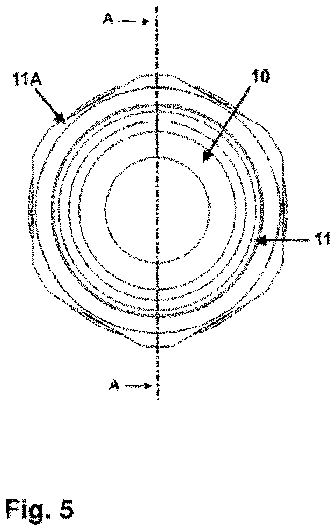

Figure 5 shows the front view of the connector detailing the cutting point.

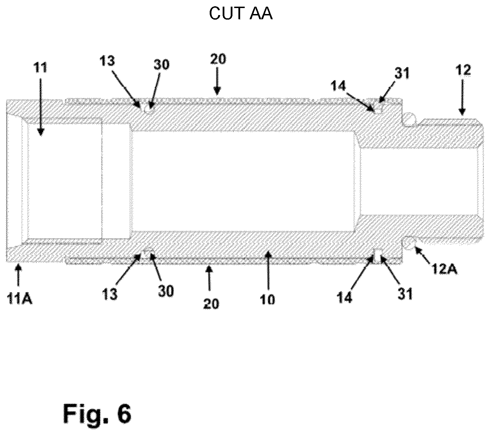

Figure 6 represents a cross-sectional view of the connector detailing the cover fixing means to the body with inner thread at one end and outer thread at the other.

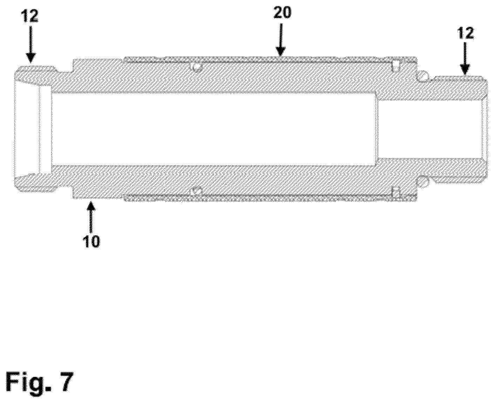

Figure 7 represents a cross-sectional view of the connector detailing the cover fixing means to the body with outer threads at both ends.

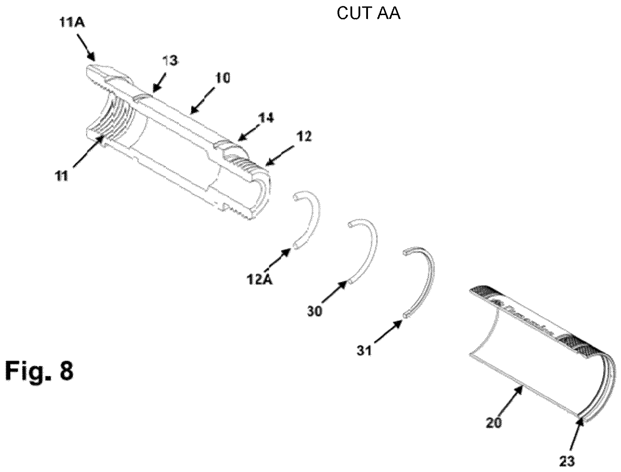

Figure 8 represents the perspective view of the connector section detailing the cover fixing means to the body.
Figure 9 represents the side view of the connector detailing its fixing with the flexible hose and quick-connect coupling.
Figure 10 represents the exploded and cross-sectional perspective view of the connector detailing its embodiment in its second embodiment.

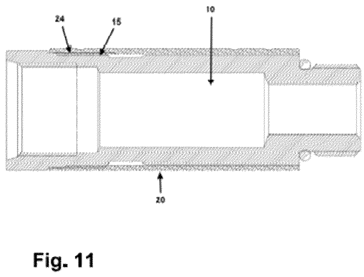

Figure 11 represents the cross-sectional view of the connector detailing the cover fixing means to the body in its second embodiment.

### DETAILED DESCRIPTION OF THE INVENTION

The flexible hose connector for use in hydraulic systems, which is the object of the present invention, describes a body (10) made of steel with an inner thread (11) for connection to the flexible hose (100) and an outer thread (12) at the opposite end for direct connection to the quick-connect coupling (200).

One of the ends of the body (10) has an external hexagonal geometry (11A) close to the inner thread, allowing greater practicality in fixing and tightening the flexible hose (100).

The outer thread (12) of the body (10) allows greater practicality in fixing with the quick-connect connector (200), avoiding the need to add an additional part to fix the assembly, reducing the number of parts in the hose connection. The outer thread (12) is equipped with a ring (12A) and when the thread is the NPT type, that is, with an angular profile, the ring is not applied.

The body (10) allows the attachment of an anodized aluminum cover (20), said cover (20) having a visual identification function, and it can receive distinct colors, symbols (21), and textures/grooves (22) for organizing the hose lines.

The cover (20) has an internal groove, a channel (23) that allows it to be fixed to the body (10).

The body (10) is equipped with grooves/channels (13)(14) allowing the positioning of the elastic ring (31) and O-ring (30) for fixing the cover (20).

The O-ring (30) is positioned in the groove (13) of the body (10), and the elastic ring (31) is positioned in the groove (14) of the body (10), thus promoting the locking and fixing of the cover (20) to the body (10).

The outer cover (20) in anodized aluminum, fixed to the body (10) by means of an elastic ring (31) is complemented by an O-ring (30) that prevents vibrations and involuntary rotation of the cover (20) during use.

The elastic ring (31) is what keeps the cover (20) locked, as it fits into the groove (23) that is aligned with the groove (14) of the body (10).

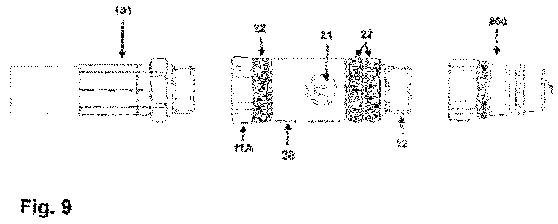

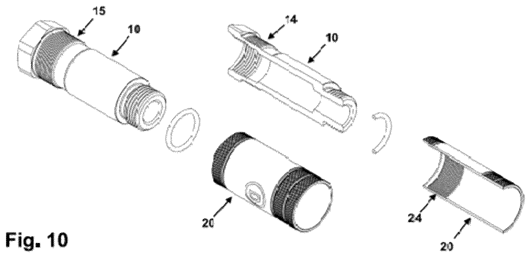

In a second embodiment, the cover (20) is fixed to the body (10) through a thread so that the cover (20) is equipped with a thread (24) at one of the ends and the body (10) is equipped with a thread (15). Thus, the thread (24) connects with the thread (15) of the body, promoting the locking of the assembly, with no need to use an elastic ring and an O-ring, as shown in Figures 9 and 10.

## Claims

1. A FLEXIBLE HOSE CONNECTOR FOR APPLICATION IN HYDRAULIC SYSTEM, comprising a body (10) made of steel equipped with an inner thread (11) or outer thread (12) and an outer thread (12) at the opposite end, said body (10) receiving an anodized aluminum cover (20) with different colors, symbols (21) and textures/grooves (22) for organizing the hose lines.

2. THE FLEXIBLE HOSE CONNECTOR FOR APPLICATION IN HYDRAULIC SYSTEM, according to claim 1, **characterized in that** the end of the body (10) with inner thread (11) or outer thread (12) has an external hexagonal geometry (11A).

3. THE FLEXIBLE HOSE CONNECTOR FOR APPLICATION IN HYDRAULIC SYSTEMS, according to claim 1, **characterized in that** the outer thread (12) of the body (10) is equipped with a ring (12A) when the thread is not of the NPT type, that is, with an angular profile.

4. THE FLEXIBLE HOSE CONNECTOR FOR APPLICATION IN HYDRAULIC SYSTEM, according to claim 1, **characterized in that** the cover (20) is equipped with an internal groove (23) for fixing to the body (10).

5. THE FLEXIBLE HOSE CONNECTOR FOR APPLICATION IN HYDRAULIC SYSTEM, according to claim 1, **characterized in that** the body (10) is provided with grooves (13)(14) for positioning the O-ring (30) and elastic ring (31) for fixing the cover (20).

6. THE FLEXIBLE HOSE CONNECTOR FOR APPLICATION IN HYDRAULIC SYSTEM, according to claim 1, **characterized in that** the O-ring (30) is positioned in the groove (13) of the body (10) and the elastic ring (31) is positioned in the groove (14) of the body (10) locking and fixing the cover (20) to the body (10).

7. THE FLEXIBLE HOSE CONNECTOR FOR APPLICATION IN HYDRAULIC SYSTEM, according to claim 1, **characterized in that** the O-ring (30) prevents vibrations and involuntary rotation of the cover (20) during use.

8. THE FLEXIBLE HOSE CONNECTOR FOR APPLICATION IN HYDRAULIC SYSTEM, according to claim 1, **characterized in that** the cover (20) fits onto the body (10) and the elastic ring (31) promotes fixation along the groove (23) aligned with the groove (14) of the body (10).

9. THE FLEXIBLE HOSE CONNECTOR FOR APPLICATION IN HYDRAULIC SYSTEM, according to claim 1, in a second construction embodiment, **characterized in that** the cover (20) is fixed to the body (10) by means of a thread, so that the cover (20) is provided with a thread (24) at one of the ends and the body (10) is provided with a thread (15).
